# EUROPÄISCHE PATENTSCHRIFT

(11) **EP 1 010 596 B1**
(45) Veröffentlichungstag und Bekanntmachung des Hinweises auf die Patenterteilung: **14.04.2004**
(21) Anmeldenummer: 99122602.8
(22) Anmeldetag: 13.11.1999
(51) Int. Cl.: B60T 7/12, B60T 8/32, B60T 7/22, B60T 13/66

(54) **Sicherheitssystem für ein Kraftfahrzeug**
Safety system for a motor vehicle
Système de sécurité pour un véhicule automobile

(30) Priorität: 17.12.1998 DE 19858292
(43) Veröffentlichungstag der Anmeldung: 21.06.2000
(73) Patentinhaber: DaimlerChrysler AG, 70567 Stuttgart (DE)
(72) Erfinder: Bullinger, Wilfried, 70825 Korntal-Münchingen (DE); Eberle, Walter, 73269 Hochdorf (DE)

(56) Entgegenhaltungen:
- EP-A- 0 322 599
- DE-A- 19 748 898
- DE-A- 19 753 971
- DE-C- 19 912 301
- US-A- 4 477 124

## Beschreibung

Die Erfindung betrifft ein Sicherheitssystem für ein Kraftfahrzeug nach dem Oberbegriff des Anspruches 1.

Ein derartiges Sicherheitssystem geht aus der EP 0 322 599 A1 hervor, wobei die Beschleunigung des Fahrzeugs in alle drei Raumrichtungen gemessen und mit Grenzwerten verglichen wird. Wird ein unfallrelevanter Grenzwert überschritten, so wird die Feststellbremse aktiviert.

Die US 3,810,520 offenbart ein Sicherheitssystem, wobei dann, wenn die Fahrzeugbeschleunigung einen Schwellenwert überschreitet, ein automatischer Bremsvorgang ausgelöst wird.

Überdies sind Sicherheitssysteme bekannt, z.B. aus DE 197 48 898 A1, die einen automatischen Bremsvorgang bei einem vor dem Fahrzeug befindlichen, erkannten Hindernis auslösen, um ein Auffahren auf das Hindernis zu vermeiden.

Ferner ist aus der Druckschrift DE 40 28 290 C1 ist ein Verfahren zur automatischen Verkürzung des Bremswegs in kritischen Fahrsituationen bekannt, um Fehlreaktionen des Fahrers, insbesondere ein unzureichend hoher Bremspedaldruck, auszugleichen. Die Gefahrensituation wird aus der Betätigungsgeschwindigkeit des Bremspedals erkannt; liegt die Bremspedal-Betätigungsgeschwindigkeit oberhalb eines Grenzwerts, so wird eine Gefahrensituation angenommen und ein automatischer Bremsvorgang ausgelöst. Bei dem automatischen Bremsvorgang wird ein erhöhter Bremsdruck aufgebaut, der größer ist als der sich aus der Bremspedal-Stellung ergebende Bremsdruck, so daß eine über die Fahrervorgabe hinausgehende Bremskraft erzeugt wird. Mit diesem Verfahren bzw. dieser Einrichtung, die auch unter dem Begriff Bremsassistent bekannt ist, kann der Bremsweg in Notsituationen verkürzt werden.

Der Bremsassistent kann zwar aus dem Fahrerverhalten eine Notsituation erkennen und die Bremskraft verstärken, wodurch Unfallsituationen verhindert werden können. Der Bremsassistent ist jedoch konzeptionsbedingt nur dazu in der Lage, ein vom Optimum abweichendes Verhalten des Fahrers auszugleichen, nicht jedoch, die Folgen von Unfallsituationen zu entschärfen, welche auf Fremdeinwirkung zurückzuführen sind. Insbesondere bei einem Heckaufprall auf ein Fahrzeug muß infolge des Impulses des auffahrenden Fahrzeugs damit gerechnet werden, daß das getroffene Fahrzeug geradeaus nach vorne oder schräg nach vorne geschleudert wird. Hierbei besteht die Gefahr, daß ein vor dem Aufprall begonnener Bremsvorgang im getroffenen Fahrzeug aufgrund des Vorwärtsruckes teilweise oder vollständig kompensiert wird, so daß das getroffene Fahrzeug auf ein vorderes oder auf ein im vorderen seitlichen Bereich stehendes Hindernis auffährt oder von der Fahrbahn abkommt. Zusätzlich zum Vorwärtsruck des getroffenen Fahrzeugs muß auch damit gerechnet werden, daß der bereits eingeleitete Bremsvorgang durch ein Abrutschen oder Zurückschleudern des Bremsfußes abgebrochen wird, so daß nach dem Aufprall das getroffene Fahrzeug keine weitere Bremswirkung mehr erfährt.

Ausgehend vom gattungsbildenden Stand der Technik liegt der Erfindung das Problem zugrunde, das Sicherheitssystem zur Verminderung der Unfallfolgen bei einem Heckaufprall zu verbessern.

Dieses Problem wird erfindungsgemäß mit den Merkmalen des Anspruches 1 gelöst.

Gemäß dem neuen Sicherheitssystem wird bei einem Heckunfall bei dem am Heck getroffenen Fahrzeug ein Bremsvorgang ausgelöst, wobei je nach Ausgangssituation und je nach Unfallschwere entweder eine Bremsung eingeleitet oder eine bereits eingeleitete Bremsung fortgeführt und gegebenenfalls verstärkt wird. Das Vergleichssignal wird durch Integration der positiven Fahrzeug-Längsbeschleunigung gewonnen, aus dem auch die Unfallschwere ermittelt werden kann. Durch diese Maßnahmen kann der vom getroffenen Fahrzeug bis zum Stillstand zurückgelegte Weg verkürzt werden, was zur Vermeidung von Kolonnenunfällen und Reduzierung der Unfallschwere beiträgt. Das getroffene Fahrzeug wird in jedem Fall unabhängig von der Fahrerreaktion abgebremst.

Das den Bremsvorgang einleitende oder fortführende Bremssignal wird ausgelöst, wenn das Vergleichssignal einen gegebenen oder berechneten Schwellwert übersteigt. Als Vergleichssignal wird hier eine mit der Fahrzeug-Längbeschleunigung korrelierende bzw. aus der Fahrzeug-Längbeschleunigung abgeleitete Größe herangezogen, die durch Integration aus der positiven Fahrzeug-Längsbeschleunigung gewonnen wird.

Das Vergleichssignal kann in einfacher Weise aus den Beschleunigungssensoren eines Airbagsystems gewonnen werden. In diesen Systemen sind Sensoren zur Messung der Fahrzeug-Längs- und Querbeschleunigung eingebaut; überschreiten die Meßsignale Grenzwerte für die Beschleunigung, so wird der Airbag ausgelöst. Aus den Meßsignalen der Sensoren des Airbagsystems können die Vergleichssignale für die automatische Auslösung des Bremsvorganges bestimmt werden. Die Höhe der Vergleichssignale dient hierbei vorteilhaft als Maß für den Wert des zu erzeugenden Bremssignals, das die Bremskraft bestimmt. Je höher das Vergleichssignal bzw. je mehr das Vergleichssignal den Schwellwert überschreitet, umso stärker ist die zu erzeugende Bremskraft, wobei die Abhängigkeit des Bremssignals vom Vergleichssignal in Kennfeldern oder in Funktionen eines Steuergeräts abgelegt werden kann und gegebenenfalls durch weitere Parameter und Zustandsgrößen beeinflußbar ist.

Alternativ oder zusätzlich zu den von den Sensoren des Airbagsystems gelieferten Beschleunigungs-Meßwerten können die Vergleichssignale auch anhand von Meßsignalen von zusätzlichen Beschleunigungssensoren ermittelt werden, die zweckmäßig am Heck des Fahrzeugs angeordnet sind.

Gemäß einer bevorzugten Ausführung wird in bestimmten Situationen ein Abschaltsignal generiert, über das das Sicherheitssystem deaktiviert werden kann. Über das Abschaltsignal können zusätzliche sicherheitsrelevante Funktionen, Zustände oder Situationen des Fahrzeugs überprüft werden und der Entscheidung, ob eine automatische Bremsung durchgeführt werden soll, zugrunde gelegt werden. Das Sicherheitssystem wird für den Fall deaktiviert und damit der automatische Bremsvorgang unterbunden, daß das Abschaltsignal einen gegebenen Wert einnimmt bzw. nicht einnimmt oder innerhalb bzw. außerhalb einer gegebenen Bandbreite liegt. Das Abschaltsignal repräsentiert Situationen, in denen aus Zweckmäßigkeitsgründen ein Auslösen der automatischen Bremsung nicht erwünscht ist. Dem Abschaltsignal kommt hierbei die Funktion eines Ein/Aus-Schalters zu, der je nach Schaltstellung einen automatischen Bremsvorgang grundsätzlich zuläßt oder aber generell unterbindet bzw. auflöst.

Zusätzlich zu der über das Vergleichssignal abgeprüften Fahrzeug-Längsbeschleunigung kann über das Abschaltsignal der Getriebezustand des Kraftfahrzeugs, der Betriebszustand und die Betätigung der Feststellbremse, die Fahrzeuggeschwindigkeit, die Bewegungsrichtung und/oder die Betätigung des Gaspedals sowie gegebenenfalls weitere Funktionen berücksichtigt werden. Die Deaktivierung kann hierbei situativ vor der Aktivierung des Sicherheitssystems oder aber nach einer erfolgten Aktivierung des Sicherheitssystems erfolgen.

Die Auslösung des automatischen Bremsvorgangs wird aus Sicherheits- und Zweckmäßigkeitsgründen zweckmäßig bei eingelegtem Rückwärtsgang und insbesondere bei Rückwärtsfahrt mit einer Fahrzeuggeschwindigkeit unterhalb einer Grenzgeschwindigkeit unterbunden, um Fahrmanöver wie rückwärts Einparken und Überfahren eines Bordsteins ohne automatische Bremsauslösung im Falle leichter Kollisionen mit Hindernissen zu ermöglichen.

Um nach einer erfolgten Aktivierung des Sicherheitssystems ein Weiterfahren des Fahrzeugs zu ermöglichen, muß die vom Sicherheitssystem automatisch erzeugte Bremskraft wieder zurückgenommen werden. Das Abschaltsignal wird hierbei in Abhängigkeit des Betriebszustands der Feststellbremse, der Fahrzeuggeschwindigkeit, der Betätigung des Gaspedals etc. generiert. So wird insbesondere nach der automatischen Bremsung geprüft, ob die Feststellbremse betätigt ist und, wenn dies der Fall ist, mittels des Abschaltsignals das Sicherheitssystem deaktiviert. Das Sicherheitssystem kann auch deaktiviert werden, wenn das Fahrzeug zum Stillstand gekommen ist oder das Gaspedal nach Ablauf einer vorgegebenen Totzeit wieder betätigt worden ist.

Es kann andererseits aber zweckmäßig sein, das Sicherheitssystem nach der Auslösung nur dann zu deaktivieren, wenn sowohl die Zündung ausgeschaltet ist als auch die Feststellbremse betätigt wurde, um sicherzustellen, daß nach einem Auffahrunfall ein an einem Hang stehendes Fahrzeug nicht versehentlich durch das Aufheben der Bremskraft in Bewegung gesetzt wird.

vorzugsweise werden die Relativgeschwindigkeit und der Abstand zum vorausfahrenden und zum nachfolgenden Fahrzeug gemessen und bei der Ermittlung der Bremskraft berücksichtigt. Die Bremskraft steigt zweckmäßig mit wachsender Differenzgeschwindigkeit des nachfolgenden Fahrzeugs an, um im Falle eines Heckaufpralls den Impuls kompensieren zu können. Mit abnehmendem Abstand sowohl zum vorausfahrenden als auch zum nachfolgenden Fahrzeug steigt vorteilhaft die Bremskraft ebenfalls an.

Der Abstand und die Relativgeschwindigkeit können zusätzlich zur Information über die Fahrzeug-Längsbeschleunigung bei der Ermittlung des Werts des Bremssignals berücksichtigt werden. Anstelle des Einflusses auf den Wert des Bremssignals kann es aber auch vorteilhaft sein, daß bereits vor einem berechneten Heckaufprall eine voraussichtlich benötigte Bremskraft errechnet wird und der entsprechend benötigte Bremsdruck bereits aufgebaut wird. Hierdurch kann die Reaktionszeit des Sicherheitssystems reduziert werden.

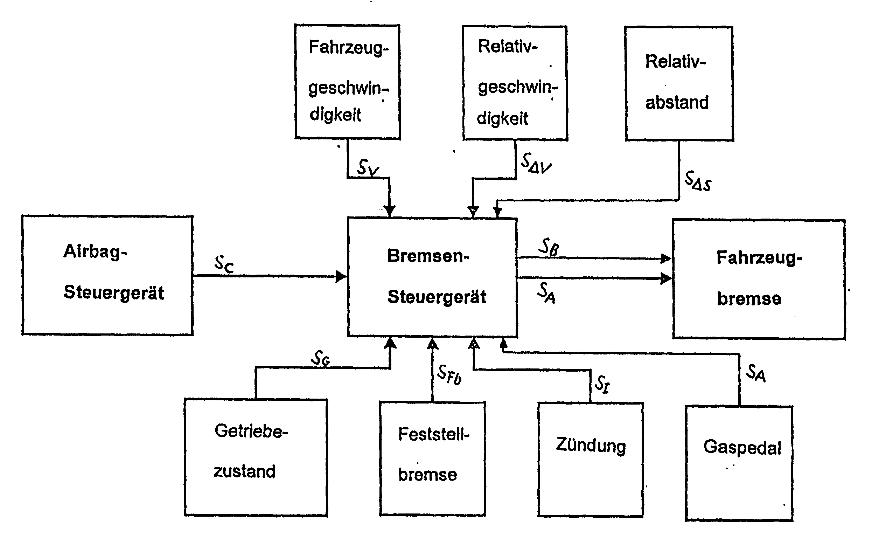

Weitere Vorteile und zweckmäßige Ausführungsformen sind den weiteren Ansprüchen, der Figurenbeschreibung und der Zeichnung zu entnehmen, in der ein Blockschaltbild zur automatischen Ansteuerung der Fahrzeugbremse bei einem Heckaufprall dargestellt ist.

Das Sicherheitssystem umfaßt ein Bremsen-Steuergerät zur Erzeugung von Bremssignalen S_{B}, welche zur Einleitung eines automatischen Bremsvorganges im Falle eines Auffahrunfalles von dem am Heck getroffenen Fahrzeug erzeugt werden. Die Bremssignale S_{B} werden über eine Signalleitung der Fahrzeugbremse bzw. dem die Bremskraft der Fahrzeugbremse steuernden Hydraulikaggregat zugeführt. Das Bremsen-Steuergerät ist über weitere Signalleitungen mit einem vorgeschalteten Airbag-Steuergerät verbunden bzw. kommuniziert mit weiteren Steuer- und Regeleinheiten bzw. mit Sensoren. Die weiteren Steuer- und Regeleinheiten bzw. Sensoren liefern Informationen in Signalform über die Fahrzeuggeschwindigkeit Sᵥ, die Relativgeschwindigkeit zu einem vorausfahrenden und/oder einem nachfolgenden Fahrzeug S_{Δv}, den Relativabstand zu einem vorausfahrenden und/oder einem nachfolgenden Fahrzeug S_{Δs}, den Getriebezustand S_{G}, den Betriebszustand der Feststellbremse S_{Fb} und der Zündung S_{I}, die Stellung des Gaspedals Sₐ sowie gegebenenfalls über weitere Parameter, Zustandsgrößen bzw. Kenngrößen zur Beschreibung von Fahrsituationen.

Das Airbag-Steuergerät kommuniziert über eine Steuerleitungsverbindung oder über eine CAN-Leitung mit dem Bremsen-Steuergerät und liefert das Vergleichssignal S_{C} an das Bremsen-Steuergerät. Das vergleichssignal S_{C} wird aus dem Arbeitssignal der im Airbagsystem detektierten positiven Fahrzeug-Längsbeschleunigung - gesehen in Fahrzeuglängsrichtung - - durch Integration gewonnen, wobei die Fahrzeug-Längsbeschleunigung sensorisch ermittelt wird und auch zur Auslösung der Airbags herangezogen wird. Im Bremsen-Steuergerät wird das Vergleichssignal S_{C} mit einem Schwellwert verglichen; übersteigt der Wert des Vergleichssignals den Schwellwert, so wird im Bremsen-Steuergerät das die Fahrzeugbremse auslösende Bremssignal S_{B} erzeugt und der Fahrzeugbremse zugeleitet, in der automatisch ein Bremsvorgang eingeleitet bzw. fortgesetzt wird.

Der Schwellwert, der zum Vergleich mit dem Vergleichssignal S_{C} herangezogen wird, kann entweder als feste, konstante Größe vorgegeben und in einer Speichereinheit des Bremsen-Steuergeräts abgelegt werden oder als gegebenenfalls mehrdimensionales Kennfeld bzw. als Funktion in Abhängigkeit von veränderlichen Einflußgrößen abgespeichert werden, insbesondere in Abhängigkeit von den vorgenannten mit dem Bremsen-Steuergerät kommunizierenden Einflußgrößen.

Der Wert des Bremssignals S_{B} kann ebenfalls von unterschiedlichen Faktoren abhängig gemacht werden, wobei der Wert des Bremssignals zwischen einem einer Teilbremsung und einem einer Vollbremsung entsprechenden Wert variierbar ist. Als Einflußgröße wird insbesondere die Relativgeschwindigkeit S_{Δv} eines nachfolgenden Fahrzeugs in Betracht gezogen, wobei das Bremssignal S_{B} umso größer wird, umso mehr die Geschwindigkeit des nachfolgenden Fahrzeugs die Eigengeschwindigkeit übersteigt. In ähnlicher Weise kann die Relativgeschwindigkeit zum vorausfahrenden Fahrzeug berücksichtigt werden, indem der Wert des die Bremskraft bestimmenden Bremssignals S_{B} in dem Maße erhöht wird wie die Eigengeschwindigkeit die Geschwindigkeit des vorausfahrenden Fahrzeugs übersteigt. Außerdem kann auch der Relativabstand S_{Δs} in die Ermittlung des Schwellwerts einfließen, wobei das Bremssignal S_{B} vorteilhaft etwa umgekehrt proportional zum Relativabstand zum nachfolgenden und/oder zum vorausfahrenden Fahrzeug eingestellt wird.

Im Bremsen-Steuergerät wird zusätzlich zum Bremssignal S_{B} ein Abschaltsignal S_{A} generiert, das die Aufgabe hat, aus Zweckmäßigkeitsgründen das Sicherheitssystem in bestimmten Fahrsituationen zu deaktivieren, so daß die Ausführung des automatischen Bremsvorgangs entweder verhindert oder daß ein bereits ausgelöster automatischer Bremsvorgang wieder aufgehoben wird. Im ersten Fall, der insbesondere ein Rückwärtsfahren ermöglichen soll, wird der Getriebezustand geprüft und ermittelt, ob der Rückwärtsgang eingelegt ist. Sofern die Fahrzeuggeschwindigkeit des rückwärts fahrenden Fahrzeugs unterhalb einer Mindestgeschwindigkeit liegt, wird das Abschaltsignal S_{A} auf einen das Sicherheitssystem deaktivierenden Wert gesetzt, so daß eine automatische Bremsung nicht ausgelöst werden kann. Unabhängig von der Fahrtrichtung kann auch ein Geschwindigkeits-Grenzwert, insbesondere eine Absolutgeschwindigkeit in Höhe von 8 km/h, vorgegeben werden, unterhalb dem eine Auslösung des automatischen Bremsvorganges verhindert wird.

Um nach einem bereits ausgelösten automatischen Bremsvorgang das Fahrzeug wieder bewegen zu können, muß die Bremswirkung wieder aufgehoben werden, wobei aus Sicherheitsgründen die Aufhebung der Bremswirkung an Bedingungen geknüpft sein kann. Insbesondere zur Verhinderung eines unbeabsichtigten Wegrollens am Berg wird der Betriebszustand der Feststellbremse und die Fahrzeuggeschwindigkeit ermittelt; beträgt die Fahrzeuggeschwindigkeit Null und ist die Feststellbremse betätigt, so befindet sich das Fahrzeug im Stillstand und ist arretiert, woraufhin über das Abschaltsignal S_{A} die automatisch ausgelöste Fahrzeugbremse wieder gelöst werden kann. Als weiteres oder alternatives Kriterium kann die Betätigung des Gaspedals herangezogen werden, wobei die Fahrzeugbremse gelöst wird, falls der Fahrer das Gaspedal betätigt.

Als zusätzliches Sicherheitskriterium kann berücksichtigt werden, daß ein Lösen der Fahrzeugbremse nicht möglich ist, wenn die Zündung ausgeschaltet ist und die Feststellbremse nicht betätigt ist.

In einer alternativen Ausführung wird das Abschaltsignal S_{A} der Fahrzeugbremse nicht als getrennt ausgebildetes Signal zugeführt, sondern es wird bereits im Bremsen-Steuergerät die Erzeugung eines die Fahrzeugbremse betätigenden Bremssignals S_{B} unterbunden.

Es kann zweckmäßig sein, die Detektion der Fahrzeug-Längsbeschleunigung unabhängig vom Airbag-Steuergerät vorzunehmen. In diesem Fall wird die Fahrzeug-Längsbeschleunigung über getrennt vom Airbag-Steuergerät ausgebildete Sensoren, insbesondere über im Heck des Fahrzeugs angeordnete Sensoren, ermittelt und dem Bremsen-Steuergerät zugeführt. Anstelle von Beschleunigungssensoren können prinzipiell auch eine Radar- oder eine Infrarotsensorik oder bildverarbeitende Systeme eingesetzt werden.

Darüberhinaus ist es auch möglich, das Vergleichssignal durch Integration der Fahrzeug-Längsbeschleunigung zu erzeugen und anschließend dem Bremsen-Steuergerät zuzuführen. Weiterhin ist es möglich, daß als Vergleichssignal S_{C} dem Bremsen-Steuergerät die Fahrzeug-Längsbeschleunigung zugeführt, diese jedoch im Bremsen-Steuergerät manipuliert wird, insbesondere gefiltert wird oder Korrekturalgorithmen unterzogen und integriert wird, um die Unfallschwere zu ermitteln.

Als Maß für die Unfallschwere kann auch die Geschwindigkeitsänderung vor und nach dem Stoß des getroffenen Fahrzeugs berücksichtigt werden.

## Patentansprüche

1. Sicherheitssystem zur Verminderung der Unfallfolgen bei Heckaufprall bei einem am Heck getroffenen Kraftfahrzeugs, wobei
- ein der positiven Fahrzeug-Längsbeschleunigung zugeordnetes Vergleichssignal (S_{C}) ermittelt wird,
- das Vergleichssignal (S_{C}) mit einem Schwellwert verglichen wird,
- und für den Fall, daß das Vergleichssignal (S_{C}) den Schwellwert übersteigt, ein die Fahrzeugbremse auslösendes Bremssignal (S_{B}) erzeugt wird,
**dadurch gekennzeichnet,**
**daß** das Vergleichssignal (S_{C}) durch Integration der positiven Fahrzeug-Längsbeschleunigung gewonnen wird

2. Sicherheitssystem nach Anspruch 1,
**dadurch gekennzeichnet,**
**daß** das Vergleichssignal (S_{C}) aus Sensoren eines Airbagsystems gewonnen wird.

3. Sicherheitssystem nach Anspruch 1 oder 2,
**dadurch gekennzeichnet,**
**daß** das Vergleichssignal (S_{C}) aus Beschleunigungssensoren am Heck des Fahrzeugs gewonnen wird.

4. Sicherheitssystem nach einem der Ansprüche 1 bis 3,
**dadurch gekennzeichnet,**
**daß** in Abhängigkeit des Werts des Vergleichssignals (S_{C}) der die Bremskraft bestimmende Wert des Bremssignals (S_{B}) festgelegt wird.

5. Sicherheitssystem nach einem der Ansprüche 1 bis 4,
**dadurch gekennzeichnet,**
**daß** ein Abschaltsignal (S_{A}) zur Deaktivierung des Sicherheitssystems für den Fall generiert wird, daß eine Funktion, ein Zustand oder eine Situation des Fahrzeugs innerhalb oder außerhalb eines bestimmten Werts bzw. einer bestimmten Bandbreite liegt.

6. Sicherheitssystem nach Anspruch 5,
**dadurch gekennzeichnet,**
**daß** der Getriebezustand des Kraftfahrzeugs überprüft wird und das Abschaltsignal (S_{A}) auf einen das Sicherheitssystem deaktivierenden Wert gesetzt wird, falls der Rückwärtsgang eingelegt ist.

7. Sicherheitssystem nach Anspruch 5 oder 6,
**dadurch gekennzeichnet,**
**daß** die Bewegungsrichtung ermittelt wird und das Abschaltsignal (S_{A}) im Falle einer Rückwärtsbewegung des Fahrzeugs auf einen das Sicherheitssystem deaktivierenden Wert gesetzt wird.

8. Sicherheitssystem nach einem der Ansprüche 5 bis 7,
**dadurch gekennzeichnet,**
**daß** das Abschaltsignal (S_{A}) auf einen das Sicherheitssystem deaktivierenden Wert gesetzt wird, falls die Fahrzeuggeschwindigkeit innerhalb einer vorgegebenen Bandbreite liegt und insbesondere eine Mindestgeschwindigkeit unterschreitet.

9. Sicherheitssystem nach Anspruch 5,
**dadurch gekennzeichnet,**
**daß** das Abschaltsignal (S_{A}) im Anschluß an das Auslösen des Sicherheitssystems erfolgt.

10. Sicherheitssystem nach Anspruch 9,
**dadurch gekennzeichnet,**
**daß** der Betriebszustand einer Feststellbremse ermittelt wird und das Abschaltsignal (S_{A}) auf einen das Sicherheitssystem deaktivierenden Wert gesetzt wird, falls die Feststellbremse betätigt ist.

11. Sicherheitssystem nach einem der Ansprüche 9 oder 10,
**dadurch gekennzeichnet,**
**daß** nach dem Auslösen des Sicherheitssystems das Abschaltsignal (S_{A}) auf einen das Sicherheitssystem deaktivierenden Wert gesetzt wird, falls das Gaspedal betätigt wird.

12. Sicherheitssystem nach einem der Ansprüche 9 bis 11,
**dadurch gekennzeichnet,**
**daß** das Abschaltsignal (S_{A}) nicht auf einen das Sicherheitssystem deaktivierenden Wert gesetzt wird, wenn die Zündung ausgeschaltet ist und die Feststellbremse nicht betätigt ist.

13. Sicherheitssystem nach einem der Ansprüche 9 bis 12,
**dadurch gekennzeichnet,**
**daß** das Abschaltsignal (S_{A}) nicht auf einen das Sicherheitssystem deaktivierenden Wert gesetzt wird, wenn die Zündung ausgeschaltet ist und bei Verwendung eines Automatikgetriebes der Wählhebel nicht auf Parkstellung steht.

14. Sicherheitssystem nach einem der Ansprüche 9 bis 12,
**dadurch gekennzeichnet,**
**daß** das Abschaltsignal (S_{A}) nicht auf einen das Sicherheitssystem deaktivierenden Wert gesetzt wird, wenn die Zündung ausgeschaltet ist und bei Verwendung eines Handschaltgetriebes kein Gang eingelegt ist.

15. Sicherheitssystem nach einem der Ansprüche 1 bis 14,
**dadurch gekennzeichnet,**
**daß** die Geschwindigkeit eines nachfolgenden Fahrzeug gemessen wird und im Falle einer automatischen Bremsung das Bremssignal (S_{B}) auf einen Wert gesetzt wird, der mit steigender Geschwindigkeit des nachfolgenden Fahrzeugs ebenfalls ansteigt.

16. Sicherheitssystem nach einem der Ansprüche 1 bis 15,
**dadurch gekennzeichnet,**
**daß** der Abstand zu einem nachfolgenden Fahrzeug gemessen wird und im Falle einer automatischen Bremsung das Bremssignal (S_{B}) auf einen Wert gesetzt wird, der mit abnehmendem Abstand des nachfolgenden Fahrzeugs ansteigt.

17. Sicherheitssystem nach einem der Ansprüche 1 bis 16,
**dadurch gekennzeichnet,**
**daß** der Abstand zu einem vorausfahrenden Fahrzeug gemessen wird und im Falle einer automatischen Bremsung das Bremssignal (S_{B}) auf einen Wert gesetzt wird, der sich reziprok zum Abstand des vorausfahrenden Fahrzeugs verhält.

18. Sicherheitssystem nach einem der Ansprüche 1 bis 17,
**dadurch gekennzeichnet,**
**daß** der Abstand und die Relativgeschwindigkeit zu einem vorausfahrenden Fahrzeug gemessen werden und im Falle einer automatischen Bremsung das Bremssignal (S_{B}) auf einen Wert gesetzt wird, der ein Auffahren auf ein vorausfahrendes Fahrzeug oder Hindernis verhindert.

## Claims

1. Safety system for reducing the consequences of accidents in the event of rear impact in a motor vehicle affected on the rear wherein
- a comparative signal (S_{c}) assigned to the positive vehicle longitudinal acceleration is determined,
- the comparative signal (S_{c}) is compared with a threshold value,
- and for the event of the comparative signal (S_{c}) exceeding the threshold value a brake signal (S_{B}) triggering the vehicle brake is produced,
**characterised in that**
the comparative signal (S_{c}) is obtained through integration of the positive vehicle longitudinal acceleration.

2. Safety system according to claim 1
**characterised in that**
the comparative signal (S_{c}) is obtained from sensors of an airbag system.

3. Safety system according to claim 1 or 2
**characterised in that**
the comparative signal (S_{C}) is obtained from acceleration sensors on the rear of the vehicle.

4. Safety system according to one of the claims 1 to 3
**characterised in that**
dependent upon the value of the comparative signal (S_{c}) the value of the brake signal (S_{B}) determining the braking force is fixed.

5. Safety system according to one of the claims 1 to 4
**characterised in that**
a switch-off signal (S_{A}) for the deactivation of the safety system is produced in the event that a function, a state or a situation of the vehicle lies inside or outside of a determined value or a determined bandwidth.

6. Safety system according to claim 5
**characterised in that**
the gear state of the vehicle is checked and the switch-off signal (S_{A}) is set to a value deactivating the safety system if the reverse gear is engaged.

7. Safety system according to claim 5 or 6
**characterised in that**
the movement direction is ascertained and the switch-off signal (S_{A}) in the case of a backward movement of the vehicle is set to a value deactivating the safety system.

8. Safety system according to one of the claims 5 to 7
**characterised in that**
the switch-off signal (S_{A}) is set to a value deactivating the safety system if the vehicle speed lies within a pre-specified bandwidth and in particular falls below a minimum speed.

9. Safety system according to claim 5
**characterised in that**
the switch-off signal (S_{A}) is effected in connection with the triggering of the safety system.

10. Safety system according to claim 9
**characterised in that**
the operating state of a parking brake is ascertained and the switch-off signal (S_{A}) is set to a value deactivating the safety system if the parking brake is activated.

11. Safety system according to one of the claims 9 or 10
**characterised in that**
after the triggering of the safety system the switch-off signal (S_{A}) is set to a value deactivating the safety system if the accelerator is activated.

12. Safety system according to one of the claims 9 to 11
**characterised in that**
the switch-off signal (S_{A}) is not set to a value deactivating the safety system if the ignition is switched off and the parking brake is not activated.

13. Safety system according to one of the claims 9 to 12
**characterised in that**
the switch-off signal (S_{A}) is not set to a value deactivating the safety system if the ignition is switched off and in the case of use of an automatic transmission the selector lever is not in park position.

14. Safety system according to one of the claims 9 to 12
**characterised in that**
the switch-off signal (S_{A}) is not set to a value deactivating the safety system if the ignition is switched off and in the case of use of a manual transmission no gear is engaged.

15. Safety system according to one of the claims 1 to 14
**characterised in that**
the speed of a subsequent vehicle is measured and in the case of an automatic brake the brake signal (S_{B}) is set to a value which increases with likewise increasing speed of the subsequent vehicle.

16. Safety system according to one of the claims 1 to 15
**characterised in that**
the distance from a subsequent vehicle is measured and in the case of an automatic brake the brake signal (S_{B}) is set to a value which increases with decreasing distance of the subsequent vehicle.

17. Safety system according to one of the claims 1 to 16
**characterised in that**
the distance from a preceding vehicle is measured and in the case of an automatic brake the brake signal (S_{B}) is set to a value which behaviours reciprocally to the distance of the preceding vehicle.

18. Safety system according to one of the claims 1 to 17
**characterised in that**
the distance and the relative speed of a preceding vehicle are measured and in the case of an automatic brake the brake signal (S_{B}) is set to a value which prevents driving into a preceding vehicle or obstacle.

## Revendications

1. Système de sécurité permettant de diminuer les conséquences d'un accident dans le cas d'un choc se produisant par l'arrière concernant un véhicule automobile heurté à l'arrière, où
- un signal de comparaison (S_{c}) associé à l'accélération longitudinale positive du véhicule est déterminé,
- le signal de comparaison (S_{c}) est comparé à une valeur de seuil,
- et au cas où le signal de comparaison (S_{c}) dépasse la valeur de seuil, un signal de freinage (S_{B}) déclenchant l'actionnement des freins du véhicule est produit,
**caractérisé**
**en ce que** le signal de comparaison (S_{c}) est obtenu par intégration de l'accélération longitudinale positive du véhicule.

2. Système de sécurité selon la revendication 1, **caractérisé en ce que** le signal de comparaison (S_{c}) est obtenu par des capteurs d'un système de coussins gonflables *(air bags)*.

3. Système de sécurité selon la revendication 1 ou 2, **caractérisé en ce que** le signal de comparaison (S_{c}) est obtenu par des capteurs d'accélération placés à l'arrière du véhicule.

4. Système de sécurité selon l'une quelconque des revendications 1 à 3, **caractérisé en ce que** la valeur du signal de freinage (S_{B}) déterminant la force de freinage est fixée en fonction de la valeur du signal de comparaison (S_{c}).

5. Système de sécurité selon l'une quelconque des revendications 1 à 4, **caractérisé en ce qu'**un signal de d'arrêt (S_{A}) est généré pour la désactivation du système de sécurité, au cas où une fonction, un état ou une situation du véhicule se trouvent à l'intérieur ou à l'extérieur d'une valeur déterminée ou d'une largeur de bande déterminée.

6. Système de sécurité selon la revendication 5, **caractérisé en ce que** l'état de la boîte de vitesses du véhicule automobile est contrôlé et le signal d'arrêt (S_{A}) est réglé sur une valeur désactivant le système de sécurité, au cas où la marche arrière est engagée.

7. Système de sécurité selon la revendication 5 ou 6, **caractérisé en ce que** la direction de déplacement est déterminée et le signal d'arrêt (S_{A}), dans le cas d'une manoeuvre en marche arrière du véhicule, est réglé sur une valeur désactivant le système de sécurité.

8. Système de sécurité selon l'une quelconque des revendications 5 à 7, **caractérisé en ce que** le signal d'arrêt (S_{A}) est réglé sur une valeur désactivant le système de sécurité, au cas où la vitesse du véhicule se trouve à l'intérieur d'une largeur de bande prédéterminée et, en particulier, dépasse la limite inférieure d'une vitesse minimum.

9. Système de sécurité selon la revendication 5, **caractérisé en ce que** le signal d'arrêt (S_{A}) se produit suite au déclenchement du système de sécurité.

10. Système de sécurité selon la revendication 9, **caractérisé en ce que** l'état de fonctionnement d'un frein d'arrêt est déterminé et le signal d'arrêt (S_{A}) est réglé sur une valeur désactivant le système de sécurité, au cas où le frein d'arrêt est actionné.

11. Système de sécurité selon la revendication 9 ou 10, **caractérisé en ce que**, après le déclenchement du système de sécurité, le signal d'arrêt (S_{A}) est réglé sur une valeur désactivant le système de sécurité, au cas où la pédale d'accélérateur est actionnée.

12. Système de sécurité selon l'une quelconque des revendications 9 à 11, **caractérisé en ce que** le signal d'arrêt (S_{A}) n'est pas réglé sur une valeur désactivant le système de sécurité, lorsque l'allumage est coupé et que le frein d'arrêt n'est pas actionné.

13. Système de sécurité selon l'une quelconque des revendications 9 à 12, **caractérisé en ce que** le signal d'arrêt (S_{A}) n'est pas réglé sur une valeur désactivant le système de sécurité, lorsque l'allumage est coupé et, en cas d'utilisation d'une boîte de vitesses automatique, que le levier sélecteur n'est pas sur la position de stationnement.

14. Système de sécurité selon l'une quelconque des revendications 9 à 12, **caractérisé en ce que** le signal d'arrêt (S_{A}) n'est pas réglé sur une valeur désactivant le système de sécurité, lorsque l'allumage est coupé et, en cas d'utilisation d'une boîte de vitesses manuelle, qu'aucune vitesse n'est engagée.

15. Système de sécurité selon l'une quelconque des revendications 1 à 14, **caractérisé en ce que** la vitesse d'un véhicule qui suit est mesurée et, dans le cas d'un freinage automatique, le signal de freinage (S_{B}) est réglé sur une valeur qui augmente également avec la vitesse croissante du véhicule qui suit.

16. Système de sécurité selon l'une quelconque des revendications 1 à 15, **caractérisé en ce que** la distance est mesurée par rapport à un véhicule qui suit et, dans le cas d'un freinage automatique, le signal de freinage (S_{B}) est réglé sur une valeur qui augmente avec la distance croissante du véhicule qui suit.

17. Système de sécurité selon l'une quelconque des revendications 1 à 16, **caractérisé en ce que** la distance est mesurée par rapport à un véhicule qui précède et, dans le cas d'un freinage automatique, le signal de freinage (S_{B}) est réglé sur une valeur qui se comporte de façon réciproque par rapport à la distance du véhicule qui précède.

18. Système de sécurité selon l'une quelconque des revendications 1 à 17, **caractérisé en ce que** la distance et la vitesse relative sont mesurées par rapport à un véhicule qui précède et, dans le cas d'un freinage automatique, le signal de freinage (S_{B}) est réglé sur une valeur qui empêche de heurter un véhicule qui précède ou un obstacle.
